# FASCICULE DE BREVET EUROPEEN

(11) **EP 0 866 583 B1**
(45) Date de publication et mention de la délivrance du brevet: **15.06.2005**
(21) Numéro de dépôt: 98400456.4
(22) Date de dépôt: 26.02.1998
(51) Int. Cl.: H04L 12/44, H04L 12/413

(54) **Réseau informatique à accès non déterministe, mais à temps d'accès déterministe**
Rechnernetzwerk mit nicht-deterministischem Zugriff, aber mit deterministischer Zugriffzeit
Computer network with non-deterministic acces, but with deterministic access time

(30) Priorité: 27.02.1997 FR 9702348
(43) Date de publication de la demande: 23.09.1998
(73) Titulaire: ALCATEL, 75008 Paris (FR)
(72) Inventeur: Vautey, Bernard, 92330 Sceaux (FR)
(74) Mandataire: Sciaux, Edmond

(56) Documents cités:
- EP-A- 0 377 361
- EP-A- 0 632 619
- US-A- 5 600 651
- ZAGURSKII V Y ET AL: "RANDOM-ACCESS METHOD WITH DETERMINISTIC DELAY AND CONTROL CAPABILITY" AUTOMATIC CONTROL AND COMPUTER SCIENCES, vol. 23, no. 3, 1 janvier 1989, pages 59-62, XP000103990

## Description

L'invention concerne un réseau informatique à accès non déterministe, c'est à dire un réseau comportant une pluralité de stations communiquant entre elles en accédant à un médium commun, selon un protocole d'accès non déterministe, c'est à dire ne permettant pas de prévoir la durée de l'attente qui sera nécessaire lorsqu'une station donnée demandera à accéder au médium à un instant donné. Cette durée est appelée temps d'accès dans ce qui suit. Par exemple, un protocole qui consiste à vérifier qu'il n'y a pas de porteuse présente sur le médium, puis commencer à émettre un message en détectant une éventuelle collision avec un autre message dont l'émission débuterait au même instant, est un protocole non déterministe. En effet, une station est incapable de prévoir l'émission de messages par d'autres stations. Le temps d'accès peut atteindre une valeur élevée si le trafic est intense sur le médium commun. Ce temps d'accès peut alors ralentir de manière prohibitive des applications en temps réel.

Le médium commun le plus courant est un bus reliant toutes les stations, ou bien un "hub passif', c'est à dire un dispositif d'interconnexion en étoile auquel chaque station est reliée par une liaison individuelle, de telle sorte que ces liaisons sont équivalentes à un bus allant de station en station. Pour réduire le risque de collision, une première solution connue consiste à remplacer ce "hub passif' par un "hub actif', c'est à dire un dispositif de routage auquel chaque station est reliée par une liaison individuelle, et qui permet de réduire le nombre de collisions. Il est nécessaire d'utiliser une cascade de "hubs" si le réseau comporte un grand nombre de stations (seize par exemple). Cette solution est donc très coûteuse, surtout si le réseau est doublé pour assurer la sécurité de son fonctionnement.

Chaque station est classiquement reliée au médium commun par un circuit d'interface qui gère le protocole d'accès à ce médium. Pour réduire le risque de collision, une seconde solution connue consiste à modifier l'implémentation du protocole d'accès, dans ce circuit d'interface, afin de réduire le nombre de collisions. Cette solution consiste donc à développer un circuit propriétaire au lieu d'utiliser un circuit conforme à une norme et disponible dans le commerce. Cette solution est donc coûteuse. Des exemples d'un réseau informatique avec détection de collision sont énonces dans les documents US-A-5 600 651; EP-A-0 632 619; Zagurskü v. y. et al: "Random-Access method with deterministic delay and control capability" Automatic Control and Computer Sciences, vol. 23, no. 3, 1 Janvier 1989, pages 59-62, XP000103990 ; EP-A-0 377 361.

Le but de l'invention est de proposer un réseau dans lequel le temps d'accès est rendu déterministe en supprimant pratiquement tout risque de collision, par des moyens moins coûteux que ceux des solutions connues.

L'objet de l'invention est un réseau informatique à accès non déterministe, mais à temps d'accès déterministe, ce réseau comportant une pluralité de stations communiquant en accèdant à un médium commun selon un protocole non déterministe, caractérisé en ce que chaque station comporte :
- des moyens pour détecter s'il y a un risque de collision entre plusieurs stations qui tenteraient d'accéder au médium commun ;
- et des moyens pour limiter, à une valeur maximale prédéterminée, son débit moyen sur ce médium commun, au moins pendant des périodes où il y a un risque de collision entre plusieurs stations tentant d'accéder au médium commun, cette valeur maximale étant choisie telle que la somme des valeurs maximales choisies respectivement pour toutes les stations est inférieure au débit moyen que peut supporter le médium commun.

Le réseau ainsi caractérisé ne connaît pratiquement plus de collisions grâce au fait que la somme des valeurs maximales choisies respectivement pour toutes les stations est inférieure au débit moyen que peut supporter le médium commun.

Selon un mode de réalisation préférentiel, les moyens pour limiter le débit moyen d'une station comportent des moyens de temporisation autorisant l'accès d'une station au médium commun après l'expiration d'un délai commençant à la fin du dernier accès de cette station, et ayant une durée qui est proportionnelle à la durée de ce dernier accès.

Le réseau ainsi caractérisé est peu coûteux à mettre en oeuvre parce que ces moyens de temporisation peuvent être constitués par une partie du logiciel du processeur de la station. Un circuit d'interface acheté dans le commerce peut être utilisé sans aucune modification.

Selon un mode de réalisation préférentiel, les moyens pour détecter s'il y a un risque de collision entre plusieurs stations qui tenteraient d'accéder au médium commun comportent des moyens pour détecter si au moins une collision a eu lieu depuis le début de la dernière transmission réalisée par cette station sur le médium commun, et pour conclure qu'il y a un risque de collision si au moins une collision a eu lieu depuis la fin de la dernière transmission réalisée par cette station.

Le réseau ainsi caractérisé est peu coûteux à mettre en oeuvre parce que ces moyens pour détecter s'il y a un risque de collision peuvent être réalisés en utilisant un compteur de collisions qui existe déjà dans certains circuits d'interface disponible dans le commerce.

L'invention sera mieux comprise et d'autres caractéristiques apparaîtront à l'aide de la description ci-dessous et des figures l'accompagnant :
- La figure 1 représente un diagramme temporel illustrant le fonctionnement d'un exemple de réseau selon l'invention ;
- La figure 2 représente le schéma synoptique de cet exemple de réalisation ;
- La figure 3 représente un organigramme des opérations réalisées dans cet exemple de réalisation.

L'exemple de réalisation décrit ci-dessous à titre d'exemple est un réseau conforme à la norme IEEE 802.3, qui est commercialisé sous la marque ETHERNET, et dont le médium a un débit moyen de 100 Mbits/s.

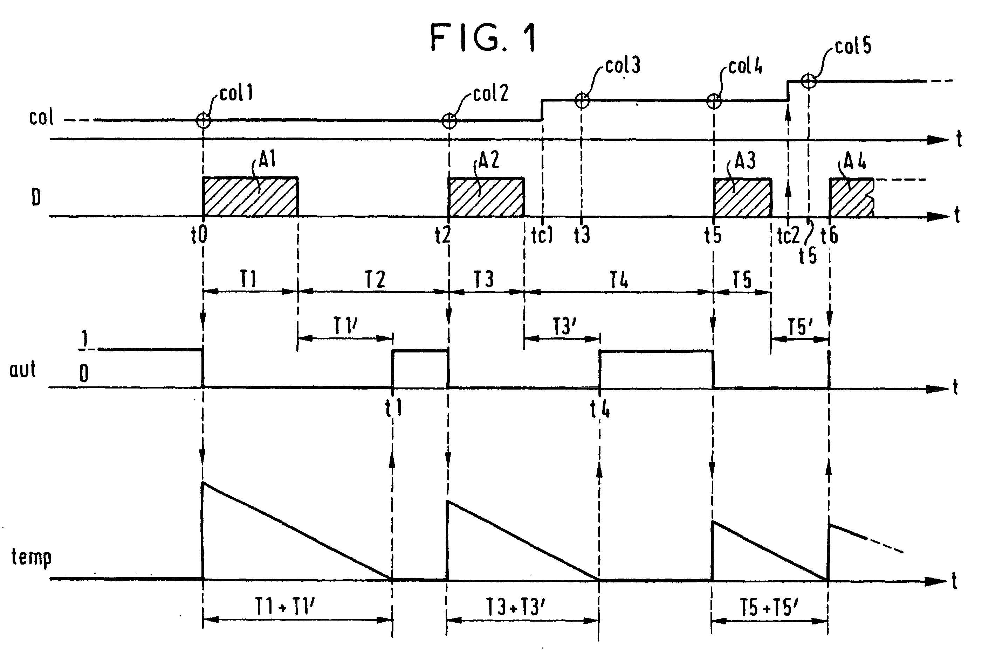

Le diagramme de la **figure 1** représente un certain nombre d'événements qui sont vus, en fonction du temps **t**, à partir d'une station donnée :
- Sur une première ligne, le contenu d'un compteur **col** qui compte le nombre de collisions sur le médium, et qui repart à zéro quand il atteint sa valeur maximale qui est 65535 par exemple (compteur à 16 bits).
- Sur une deuxième ligne, les trames de données **D** qui sont émises par la station considérée.
- Sur une troisième ligne, la valeur d'un drapeau **aut** qui donne l'autorisation, à la station considérée, d'émettre une trame, lorsqu'il a la valeur 1.
- Sur une quatrième ligne, la valeur **temp** d'un compteur de temporisation **TEMP.**

Au début de l'intervalle de temps représenté sur la figure 1, le compteur de collision **col** a une valeur quelconque. Aucune trame n'est en cours d'émission. Le drapeau **aut** a la valeur 1 qui autorise la station à émettre, et le compteur de temporisation **temp** a la valeur 0.

A un instant **t0** la station a besoin d'émettre une trame **A1** sur le médium. La valeur 1 du drapeau **aut** lui indique qu'elle est autorisé à accéder au médium car il n'y a pas ou peu de risque de collision. Elle est autorisée à émettre immédiatement la trame **A1**. Celle-ci a une longueur correspondant à une durée d'émission **T1** par exemple. Juste avant l'émission, la valeur actuelle **col1** du compteur de collision est sauvegardée pour servir de référence plus tard.

Au début de l'émission de la trame **A1,** le compteur de temporisation **temp** est initialisé avec une valeur telle que le décomptage jusqu'à 0 a une durée **T1+T1'**. La durée **T1** est calculée à partir de la longueur de la trame **A1,** et du débit nominal sur le médium commun. La durée **T1**' est calculée de manière que la valeur du débit moyen de cette station pendant l'intervalle **T1+T1'** sera égale à la valeur maximale de débit moyen qui a été choisie pour la station considérée. Dans cet exemple, la valeur maximale du débit moyen de cette station étant choisie égale à la moitié du débit nominal du médium commun, la valeur d'initialisation est choisie telle qu'il va décompter pendant une durée **T1+T1'** égale à deux fois la durée **T1** de la trame, **A1**, que cette station va émettre. Le drapeau **aut** est mis à zéro pendant toute la durée du décomptage, pour interdire à la station considérée d'occuper le médium commun s'il y a un risque de collision. S'il n'y a pas de risque de collision, la station ne tiendra pas compte du drapeau **aut**.

Quand elle a fini d'émettre la trame A1,la station cesse d'émettre pendant un certain temps **T2**, supérieur à la durée **T1'**. Pendant cette période, la valeur **temp** du compteur **TEMP** revient à 0, à l'instant **t1**, ce qui a pour effet de remettre à 1 la valeur du drapeau **aut**.

Puis, à l'instant **t2**, la station considérée a de nouveau besoin d'émettre une trame, **A2**. La valeur 1 du drapeau **aut** autorise l'émission sans vérifer s'il y a un risque de collision. La station émet donc la trame **A2** immédiatement. Juste avant l'émission, la valeur actuelle **col2** = **col1** du compteur de collisions est sauvegardée pour servir de référence plus tard. D'autre part, le compteur **temp** est initialisé à une valeur **T3+T3'** telle qu'il va décompter pendant une durée égale à deux fois la durée **T3** de la trame **A2** que cette station va émettre. Le drapeau **aut** est mis à zéro pendant toute la durée **T3+T3'** du décomptage, pour interdire à la station considérée d'accéder au médium commun s'il y a un risque de collision.

Puis la station cesse d'émettre pendant une durée **T4** supérieure à **T3'**. Après la fin de l'émission de la trame **A2**, mais pendant la durée **T3+T3'** du décomptage, une collision est détectée à l'instant **tc1**. La valeur **col** du compteur de collisions est alors augmentée d'une unité. Un peu plus tard, à un instant **t3**, la station a besoin d'émettre une trame **A3**. Le drapeau **aut** ayant la valeur 0, il interdit à la station considérée d'accéder au médium, sauf s'il n'y a pas de risque de collision. Elle doit donc d'abord déterminer s'il y a un risque de collision. Pour cela, elle compare la valeur actuelle **col3** du compteur **col** avec la valeur sauvegardée **col2**. La valeur actuelle **col3** est égale à **col2** + **1**, par conséquent il y a un risque de collision, et la station doit différer son émission jusqu'à ce que le drapeau **aut** reprenne la valeur 1.

A l'instant **t5**, le compteur **temp** repasse à la valeur 0, le drapeau **aut** est remis à la valeur un, et la station émet alors la trame **A3** qui a une durée **T5**. Juste avant l'émission, la valeur actuelle **col4** du compteur de collision est sauvegardée pour servir de référence plus tard. D'autre part, le compteur de temporisation **temp** est initialisé à une valeur telle que le décomptage jusqu'à zéro aura une durée **T5+T5'**. Dans cet exemple, la valeur maximale du débit moyen de cette station étant choisie égale à la moitié du débit nominal du médium commun, la valeur d'initialisation est choisie telle qu'il va décompter pendant une durée **T5+T5'** égale à deux fois la durée **T5** de la trame **A3** que cette station va émettre. Le drapeau **aut** est mis à zéro pendant toute la durée du décomptage, pour interdire à la station considérée accéder au médium commun, s'il y a un risque de collision.

Après la fin de l'émission de la trame **A3**, mais pendant la durée **T5+T5'** du décomptage, une collision est détectée à l'instant **tc2**. La valeur du compteur de collisions **col** est alors augmentée d'une unité. Un peu plus tard, à un instant **t5**, la station a besoin d'émettre une trame **A4**. Le drapeau **aut** ayant la valeur 0, il interdit à la station d'accéder au médium, sauf s'il n'y a pas de risque de collision. Elle doit donc d'abord déterminer s'il y a un risque de collision. Pour cela, elle compare la valeur actuelle **col5** du compteur **col** avec la valeur sauvegardée **col4**. La valeur actuelle **col5** est égale à **col4** + 1, par conséquent il y a un risque de collision, et la station doit différer son émission jusqu'à ce que le drapeau **aut** reprenne la valeur 1. A l'instant **t6**, Le drapeau **aut** passe à 1, l'émission de la trame **A4** commence, le drapeau **aut** est remis à zéro, et le compteur **temp** est réinitalisé.

Le débit moyen maximal de chaque station peut être différent selon la station. La seule condition nécessaire pour réduire les risque de collision est que la somme des valeurs maximales choisies respectivement pour toutes les stations est inférieure au débit moyen que peut supporter le médium commun.

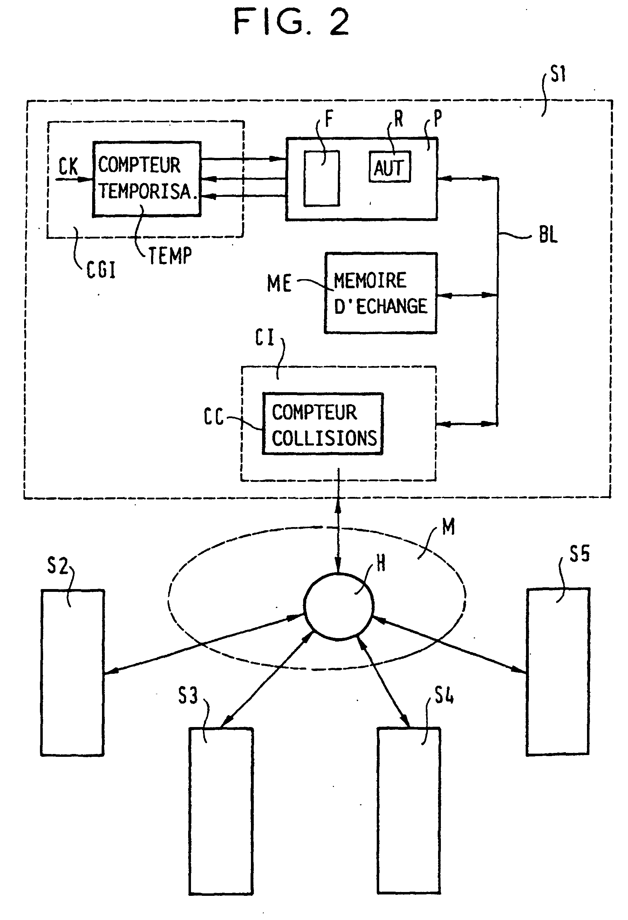

La **figure 2** représente le schéma synoptique d'un exemple de réalisation du réseau selon l'invention. Il comporte cinq stations analogues **S1**, **S2**, **S3**, **S4**, **S5**, reliées chacune à un médium commun M qui est constitué par une liaison individuelle pour chaque station, et un "hub passif" **H** où convergent ces liaisons. Cette structure en étoile est équivalente à un bus qui irait de station en station. En particulier, il y a une collision de deux trames si deux stations tentent d'émettre au même instant. Chaque station, la station **S1** par exemple, comporte :
- un bus local **BL** ;
- un processeur **P** comportant : une entrée-sortie reliée au bus local **BL**, un registre **R** pour mémoriser le drapeau **aut**, et une file d'attente **F** pour mettre en attente une (ou plusieurs trames) prête pour être émise mais qui ne peut être émise immédiatement ;
- une mémoire **M** dite d'échange, ayant une entrée-sortie reliée au bus local **BL**;
- un circuit **CGI** de gestions d'interruptions, classique, comportant un compteur de temporisation **TEMP** ayant : une entrée d'horloge recevant un signal d'horloge **CK**, une entrée de commande de décrémentation et une entrée d'initialisation reliées respectivement à deux sorties du processeur **P**, et une sortie reliée à une entrée du processeur **P** pour lui fournir un signal d'interruption lui commandant de décrémenter la valeur **temp** du compteur **TEMP** ;
- et un circuit d'interface **Cl**, ayant une entrée-sortie reliée au bus local **BL** et une entrée-sortie reliée au "hub" **H**, et comportant un compteur de collisions CC.

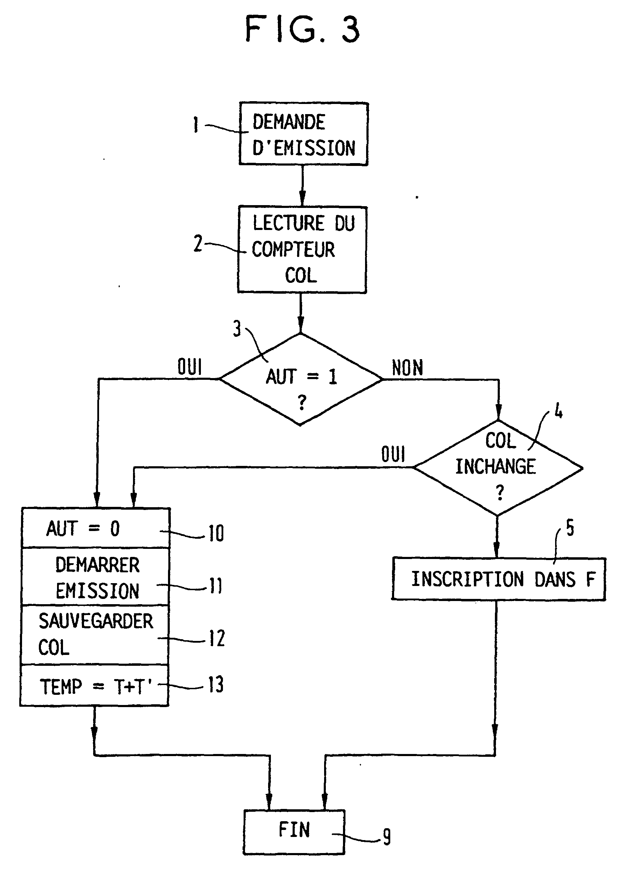

La **figure 3** représente un organigramme des opérations réalisées dans cet exemple de réalisation. Une application fait une demande d'émission **1**. Le processeur **P** fait une lecture **2** de la valeur **col** du compteur de collisions **CC**. Puis il fait un test **3** de la valeur du drapeau **aut** :
- Si le drapeau vaut 1, le processeur **P** fait successivement les opérations suivantes:
   -- opération **10** de remise du drapeau **aut** à 0 ;
   -- Démarrer l'émission **11** de la trame à émettre, via la mémoire d'échange **ME**, et le circuit d'interface **CI** ;
   -- sauvegarde **12** de la valeur **col** du compteur de collisions **CC** ;
   -- réinitialisation **13** du temporisateur **TEMP** à la valeur **T+T'**, où **T** est la durée calculée pour l'émision de la trame qui va être émise, et où **T'=T** dans cet exemple ;
   -- fin **9** de la séquence .
- Si le drapeau vaut 0, le processeur **P** fait une comparaison **4** entre la valeur **col** qu'il vient de lire et la précédente valeur **col** qu'il a sauvegardée :
   -- et si ces deux valeurs sont identiques, le processeur **P** fait les opérations **10,...13, 9** mentionnées précédemment ;
   -- sinon, il fait une opération **5** consistant à inscrire la trame à émettre, dans la file d'attente **F**, et arrive à la fin **9** de la séquence.

Par ailleurs, le circuit **CGI** de gestion des interruptions fournit périodiquement au processeur **P** un signal d'interruption lui commandant de décrémenter la valeur **temp** du temporisateur **TEMP** jusqu'à ce qu'elle atteigne la valeur 0. Lorsqu'elle atteint la valeur 0, le processeur **P** remet à 1 le drapeau **aut** et il émet sur le médium **M** la première des trames qui sont en attente dans la file **F**.

## Revendications

1. Réseau informatique à accès non déterministe, mais à temps d'accès déterministe, ce réseau comportant une pluralité de stations (S1,..., S5) communiquant en accèdent à un médium commun (M) selon un protocole non déterministe, **caractérisé en ce que** chaque station comporte :
- des moyens (CC) pour détecter s'il y a un risque de collision entre plusieurs stations qui tenteraient d'accéder au médium commun ;
- et des moyens (TEMP) pour limiter, à une valeur maximale prédéterminée, son débit moyen sur ce médium commun, au moins pendant des périodes où il y a un risque de collision entre plusieurs stations tentant d'accéder au médium commun, cette valeur maximale étant choisie telle que la somme des valeurs maximales choisies respectivement pour toutes les stations est inférieure au débit moyen que peut supporter le médium commun.

2. Réseau selon la revendication 1, **caractérisé en ce que** les moyens (TEMP) pour limiter le débit moyen d'une station comportent des moyens de temporisation autorisant l'accès d'une station au médium commun (M) après l'expiration d'un délai (T3') commençant à la fin du dernier accès (A2) de cette station, et ayant une durée qui est proportionnelle à la durée (T3) de ce dernier accès.

3. Réseau selon la revendication 1, **caractérisé en ce que**, les moyens pour détecter s'il y a un risque de collision entre plusieurs stations qui tenteraient d'accéder au médium commun comportent des moyens (CC) pour détecter si au moins une collision a eu lieu depuisle début de la dernière transmission réalisée par cette station sur le médium commun, et pour conclure qu'il y a un risque de collision si au moins une collision a eu lieu depuis la fin de la dernière transmission réalisée par cette station.

## Patentansprüche

1. Rechnernetzwerk mit nichtdeterministischem Zugriff, aber mit deterministischer Zugriffszeit, beinhaltend mehrere Stationen (S1, ..., S5), die kommunizieren, indem sie gemäß einem nichtdeterministischen Protokoll auf ein gemeinsames Medium (M) zugreifen, **dadurch gekennzeichnet, daß** jede Station folgendes beinhaltet:
- Mittel (CC), mit denen festgestellt wird, ob das Risiko einer Kollision zwischen mehreren Stationen besteht, wenn diese versuchen würden, auf das gemeinsame Medium zuzugreifen,
- sowie Mittel (TEMP) zur Begrenzung ihrer mittleren Datenrate auf diesem gemeinsamen Medium auf einen vorher festgelegten Maximalwert, zumindest während der Dauer von Zeitintervallen, in welchen das Risiko einer Kollision zwischen mehreren Stationen besteht, die versuchen, auf das gemeinsame Medium zuzugreifen, wobei dieser Maximalwert so gewählt wird, daß die Summe der für die einzelnen Stationen jeweils gewählten Maximalwerte kleiner als die mittlere Datenrate ist, die das gemeinsame Medium unterstützen kann.

2. Rechnernetzwerk gemäß Anspruch 1, **dadurch gekennzeichnet, daß** die Mittel (TEMP) zur Begrenzung der mittleren Datenrate einer Station Zeitverzögerungsmittel beinhalten, welche den Zugriff einer Station auf das gemeinsame Medium (M) nach Ablauf eines Intervalls (T3') freigeben, das am Ende des letzten Zugriffs (A2) dieser Station beginnt und eine Dauer hat, die proportional zum Intervall (T3) dieses letzten Zugriffs ist.

3. Rechnernetzwerk gemäß Anspruch 1, **dadurch gekennzeichnet, daß** die Mittel, mit denen festgestellt wird, ob das Risiko einer Kollision zwischen mehreren Stationen besteht, wenn diese versuchen würden, auf das gemeinsame Medium zuzugreifen, Mittel (CC) beinhalten, mit denen festgestellt wird, ob sich seit Beginn der letzten von dieser Station über das gemeinsame Medium bewerkstelligten Übertragung mindestens eine Kollision ereignet hat, und mit denen gefolgert werden kann, ob ein Kollisionsrisiko besteht, wenn sich seit Beginn der letzten von dieser Station bewerkstelligten Übertragung mindestens eine Kollision ereignet hat.

## Claims

1. A data-processing network having non-deterministic access but having deterministic access time, the network including a plurality of stations (S1, ..., S5) communicating with one another by accessing a common medium (M) using a non-deterministic protocol, said network being **characterized in that** each station includes:
- means (CC) for detecting whether there is a risk of collision between a plurality of stations trying to access the common medium; and
- means (TEMP) for limiting its mean bit rate over the common medium to a predetermined maximum value at least during the periods in which there is a risk of collision between a plurality of stations trying to access the common medium, said maximum value being chosen such that the sum of the respective maximum values chosen for all of the stations is less than the mean bit rate that can be accommodated by the common medium.

2. A network according to claim 1, **characterized in that** the means (TEMP) for limiting the mean bit rate of a station comprise time-delay means authorizing a station to access the common medium (M) after expiry of a delay (T3') starting at the end of the most recent access (A2) by the station, and having a duration which is proportional to the duration (T3) of said most recent access.

3. A network according to claim 1, **characterized in that** the means for detecting whether there is a risk of collision between a plurality of stations trying to access the common medium comprise means (CC) for determining whether at least one collision has taken place since the beginning of the most recent transmission performed by the station over the common medium, and for concluding that there is a risk of collision if at least one collision has occurred since the end of the most recent transmission performed by said station.
